# EUROPÄISCHE PATENTSCHRIFT

(11) **EP 0 532 975 B1**
(45) Veröffentlichungstag und Bekanntmachung des Hinweises auf die Patenterteilung: **21.02.1996**
(21) Anmeldenummer: 92114944.9
(22) Anmeldetag: 02.09.1992
(51) Int. Cl.: F21V 8/00, F21V 9/08, F21Q 3/00, H01H 9/18, G09F 9/30

(54) **Durch einen Lichtleiter beleuchtbares Symbol einer Wandung**
Symbol integrated in a wall and lit by an optical conductor
Symbole porté par une paroi et éclairé par un conducteur optique

(30) Priorität: 20.09.1991 DE 4131340
(43) Veröffentlichungstag der Anmeldung: 24.03.1993
(73) Patentinhaber: Preh-Werke GmbH & Co. KG, D-97616 Bad Neustadt (DE)
(72) Erfinder: Bauer, Karl-Heinz, W-8740 Bad Neustadt/Saale (DE); Wolf, Reinhold, W-8740 Bad Neustadt/Saale (DE)

(56) Entgegenhaltungen:
- DE-A- 2 803 539
- US-A- 4 225 766

## Beschreibung

Die Erfindung betrifft ein durch einen Lichtleiter beleuchtbares Symbol auf der Oberfläche einer Wandung, insbesondere der Wandung eines Gehäuses oder einer Abdeckung, wobei der Lichtleiter mit einem Endabschnitt die Wandung durchdringt und an der Oberfläche das Symbol ausbildet.

Beleuchtbare Symbole sind in der Technik häufig anzutreffen. Sie werden beispielsweise eingesetzt um Betriebszustände aufzuzeigen oder um Betätigungshinweise zu geben. Solche Betätigungshinweise findet man unter anderem auf Tastflächen elektrischer Schalter und an Stellpositionen von dreh- oder längsbeweglichen Handhaben. Symbole, so beispielsweise am Armaturenbrett eines Kraftfahrzeuges, werden beleuchtet, damit sie auch bei Dunkelheit gut erkennbar sind.

Ein Symbol der bezeichneten Art ist der DE-A-35 35 881 entnehmbar. Ein Lichtleiter überträgt dort das Licht einer vertieft angeordneten, zentralen Lichtquelle durch die Wandung eines Bedienaggregates hindurch bis an dessen Oberfläche. An der Oberfläche bildet der Lichtleiter durch entsprechende Gestaltung seines Endabschnittes ein durch die Lichtquelle beleuchtbares Symbol. Ein Symbol kann einfach, z.B. als Dreieck, Viereck, Linie etc. ausgebildet sein, es kann auch in der Gestalt von Zeichen oder Sinnbildern vorliegen.

Für Wandungen werden häufig durch Spritzgießen verarbeitbare Kunststoffe, unter anderem wegen ihrer guten Formbarkeit, verwendet. Ein solcher Kunststoff ist beispielsweise Novodur®, ein Styrol-Polymerisat der Fa. Bayer. Die Lichtleiter sind transparent oder bei leichter Einfärbung durchscheinend. Lichtleiter bestehen aus Glas und zunehmend mehr auch aus Kunststoff, so z.B. aus transparentem Polyacrylat oder Polycarbonat.

Die Erkennbarkeit eines gattungsgemäßen Symboles ist von seinem Kontrast zur Farbe der Wandung beeinflußt. Ein kräftiger, farblicher Kontrast läßt ein Symbol leicht erfassen. Deshalb wird ein solches, anhand eines transparenten oder durchscheinenden Lichtleiters erhelltes Symbol bei Dunkelheit gut wahrzunehmen sein, jedoch wird dessen Sichtbarkeit bei Tageslicht wegen der Transparenz des Lichtleiters mangelhaft erscheinen. Würde man den Lichtleiter oder zumindest seinen Endabschnitt einfärben, um damit einen ausreichenden Kontrast zur Wandung zu erzeugen, würde dies die Situation umkehrend zwar die Tagessichtbarkeit eines solchen Symboles fördern, jedoch gleichzeitig die Lichtleitfähigkeit und damit dessen Sichtbarkeit bei Dunkelheit mindern. Eine vergleichbare Lage würde sich ergeben, wollte man die Oberfläche des Symboles zur Oberfläche der Wandung kontrastierend mit Farbe ausstatten.

Es war somit Aufgabe der Erfindung für ein Symbol der eingangs bezeichneten Art eine bei Tag und bei Nacht gleichermaßen gute Erkennbarkeit mit einfachen Mitteln zu ermöglichen. Dies wird gemäß dem kennzeichnenden Merkmal des Anspruches 1 erreicht, indem eine dünne durchscheinende Folie zumindest den der Wandung benachbarten Endabschnitt des Lichtleiters und das Symbol umschließt. Dabei wird die Folie einen Farbeindruck erzeugen, der zur Farbe der Wandung kontrastiert. Die Merkmale der weiteren Ansprüche bilden die Erfindung vorteilhaft weiter.

Indem die Folie den Endabschnitt des Lichtleiters zumindest im Durchdringungsbereich der Wandung umschließt, kann die Farbe der Wandung nicht mehr in den Lichtleiter einstrahlen und somit nicht mehr die Farbwirkung der Symbolfläche beeinflussen. Dies ist insbesondere bei dunkelfarbenen Wandungen von Vorteil. Ansonsten würde ein transparenter Lichtleiter auf seiner Symbolfläche im unbeleuchtetem Zustand die Farbe der Wandung wiedergeben und den Kontrast vermissen lassen. Es ist weiterhin von Vorteil, daß eine gute Tagessichtbarkeit des Symboles schon bei schwacher Einfärbung der dünnen Folie zu erlangen ist, da ihre Farbwirkung durch eine z.B. schwarzfarbene Wandung nicht beeinträchtigt wird. Eine schwache Einfärbung macht die Folie gut durchscheinend und ist der Beleuchtung des Symboles nicht hinderlich. Somit ist für ein erfindungsgemäß gestaltetes Symbol eine bei Tag und bei Nacht vorherrschende gute Sichtbarkeit einrichtbar; das Symbol ist dann gleichermaßen leicht erkennbar.

Die Folie kann auf den Endabschnitt des Lichtleiters geklebt sein. Die Folie kann auch während der Formung des Lichtleiters auf diesen aufgeschweißt sein. Bei letzterem wird die Folie beispielsweise in das Formwerkzeug des Lichtleiters eingelegt. In solchen Fällen und auch bei einer möglicherweise nachfolgenden Umspritzung durch die Wandung ist es unter anderem aus werkzeugtechnischen Gründen dann vorteilhaft, den Lichtleiter zu unterteilen und den in der Regel geringervolumigen und weniger sperrigen Endabschnitt als separates Teil auszubilden. Ein separater Endabschnitt des Lichtleiters kann außerdem problemfrei zur Farbgestaltung des Symboles genutzt werden. Wird beispielsweise für die Folie eine Weißfärbung gewählt und der Endabschnitt ist wie der Lichtleiter transparent, so ist das Symbol bei Tag wie erhellt bei Nacht stets weißfarben. Wählt man jedoch eine von der weißfarbenen Folie sich unterscheidende, leichte Einfärbung des kurzen Endabschnittes, z.B. grün, so erscheint das unbeleuchtete Symbol bei Tageslicht weißfarben und das beleuchtete Symbol, vor allem nachts, grünfarben. Man spricht in solchen Fällen von einem unterschiedlichen Tages- und Nacht-Design. Ähnliche Farbgestaltungen kann man auch mit einer buntgefärbten oder mit einer farbig hinterdruckten Folie erreichen. Wird die Wandung im Spritzgießverfahren dem Lichtleiter angeformt, so geht der Symbolrand ritzenfrei in die Oberfläche der Wandung über.

Es folgt die Beschreibung eines Erfindungsbeispieles anhand von Zeichnungen. Es zeigen:
- Figur 1: den Ausschnitt einer Wandung mit Symbolen in Draufsicht,
- Figur 2: Wandung mit einem Symbol und mit einem Lichtleiter im Schnitt längs der Linie II-II in Figur 1 dargestellt,
- Figur 3: Wandung mit zwei Symbolen und mit Lichtleitern im Schnitt längs der Linie III-III in Figur 1 dargestellt.

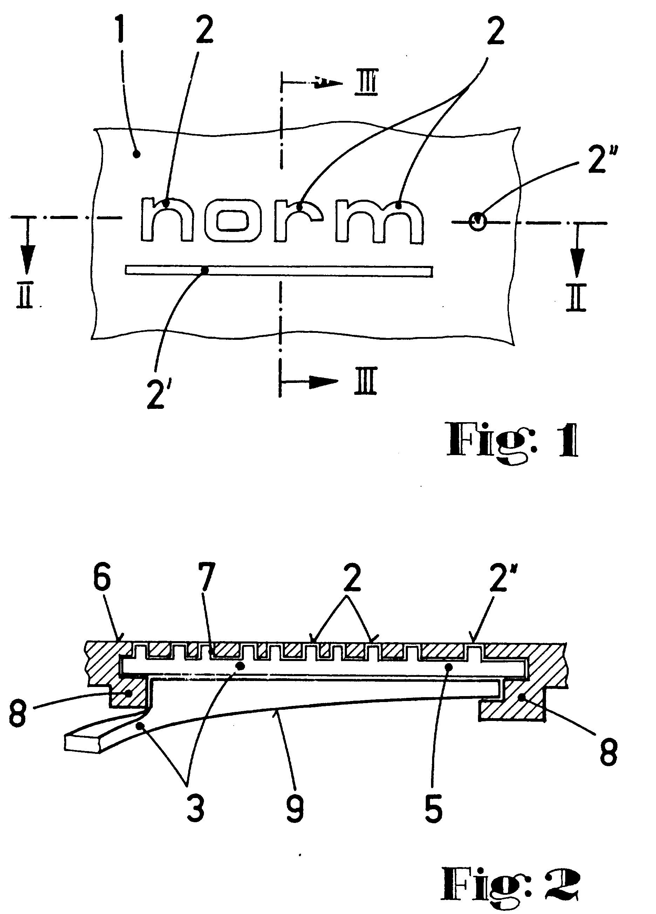

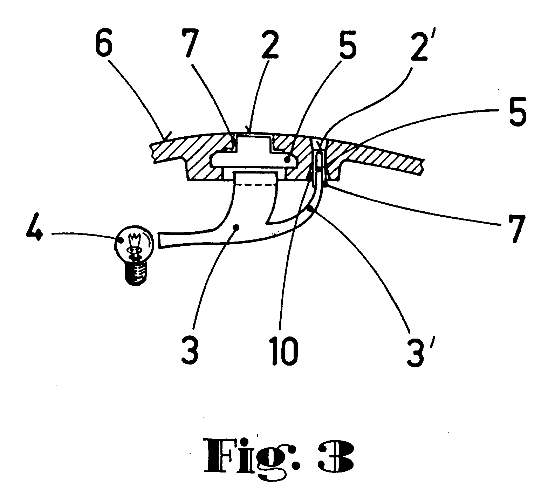

Figur 1 zeigt eine Wandung (1) als Ausschnitt einer umfassenderen Frontblende. Die Wandung in Draufsicht dargestellt läßt eine Vielzahl Symbole (2, 2', 2'') erkennen, die in ihrer Gesamtheit einen unterstrichenen (2') mit einer Kreisfläche (2'') abgeschlossenen Begriff, nämlich das Wort 'norm' ausbilden. Die Wandung (1) besteht aus einem nichttransparenten, nicht durchscheinenden, bevorzugt schwarzfarbenen Kunststoff. Die Symbole (2, 2', 2'') werden gemäß Figur 2 von den Abschlußflächen eines aus transparentem Kunststoff bestehenden Lichtleiters (3) geformt. Der von einer Lichtquelle (4) ausgehende Lichtleiter (3) durchdringt dabei mit Teilen seines separat angefertigten Endabschnittes (5) die Wandung (1) und bildet 50 auf deren Oberfläche (6) eine Anzahl Einzelsymbole (2, 2''). Die Symbole (2, 2', 2'') und ebenso der Endabschnitt (5) des Lichtleiters (3) sind von einer 0,02 mm dicken Folie (7) aus hochmolekularem Niederdruck-Polyäthylen umschlossen. Die durchscheinende Folie (7) ist weißfarben. Der Endabschnitt (5) des Lichtleiters (3) ist in die Wandung eingebettet. So können an den Symbolrändern keine Ritzen entstehen. Der Lichtleiter (3) ist an Aufnahmen (8) der Wand zu seinem Endabschnitt (5) hin ausgerichtet und gehalten.

Durch die Trennwirkung der Folie (7) kann die schwarzfarbene Wandung (1) nicht in den Endabschnitt (5) des Lichtleiters (3) einstrahlen. Die Wandung kann somit die weiße Farbe der Symbole (2, 2', 2'') nicht verfälschen, die Farbwirkung der Symbole ist im Tagesdesign weiß. Diese Farbwirkung ist auch im Nachtdesign gegeben. Dabei wird das vom Lichtleiter (3) herangeführte Licht an seiner strukturierten Innenseite (9) durch den Endabschnitt (5) hindurch in die Symbolflächen reflektiert.

In Figur 3 ist ein mit einer durchscheinenden Folie (7) umhüllter Lichtleiter (3') mit einem einstückigen Endabschnitt in eine vorbereitete Öffnung (10) der Wandung eingesteckt. Der bis an die Oberfläche (6) vordringende Lichtleiter (3') bildet dort in vertiefter Anordnung das Strich-Symbol (2'). In der in Figur 3 gegebenen Anordnung sind die Folien der beiden Symbole (2, 2') unterschiedlich eingefärbt.

### Bezugszeichenliste.

- 1: Wandung
- 2,2',2'': Symbol
- 3,3': Lichtleiter
- 4: Lichtquelle
- 5: Endabschnitt
- 6: Oberfläche
- 7: Folie
- 8: Aufnahme
- 9: Innenseite
- 10: Öffnung

## Patentansprüche

1. Durch einen Lichtleiter (3, 3') beleuchtbares Symbol (2, 2', 2'') auf der Oberfläche (6) einer Wandung (1), insbesondere der Wandung eines Gehäuses bzw. einer Abdeckung, wobei der Lichtleiter (3, 3') mit einem Endabschnitt (5) die Wandung (1) durchdringt und an der Oberfläche (6) das Symbol (2, 2', 2'') ausbildet,
dadurch gekennzeichnet,
daß eine dünne, durchscheinende Folie (7) zumindest den der Wandung (1) benachbarten Endabschnitt (5) und das Symbol (2, 2', 2'') umschließt.

2. Durch einen Lichtleiter beleuchtbares Symbol nach Anspruch 1,
dadurch gekennzeichnet,
daß der Endabschnitt (5) ein separater Abschnitt des Lichtleiters (3) ist.

3. Durch einen Lichtleiter beleuchtbares Symbol nach einem der Ansprüche 1 oder 2,
dadurch gekennzeichnet,
daß die Wandung (1) aus spritzgießbarem Kunststoff besteht, und daß die Wandung (1) um den von einer Folie (7) umschlossenen Endabschnitt (5) geformt ist.

4. Durch einen Lichtleiter beleuchtbares Symbol nach einem der Ansprüche 1 bis 3,
dadurch gekennzeichnet,
daß die Folie (7) gefärbt ist.

5. Durch einen Lichtleiter beleuchtbares Symbol nach einem der Ansprüche 1 bis 4,
dadurch gekennzeichnet,
daß die Folie (7) hinterdruckt ist.

6. Durch einen Lichtleiter beleuchtbares Symbol nach einem der Ansprüche 1 bis 5,
dadurch gekennzeichnet,
daß die Folie (7) zwischen 0,01 bis 0,05 mm, bevorzugt 0,02 mm dick ist.

## Claims

1. Symbol (2, 2', 2") to be lit by a light guide (3, 3') on the surface (6) of a wall (1), in particular the wall of a housing or a cover, an end section (5) of the light guide (3, 3') penetrating the wall (1) and forming the symbol (2, 2', 2") on the surface (6),
characterised in that
a thin, translucent foil (7) encloses the symbol (2, 2', 2") and at least the end section (5) adjacent to the wall (1).

2. Symbol lit by a light guide according to claim 1,
characterised in that
the end section (5) is a separate section of the light guide (3).

3. Symbol lit by a light guide according to one of
claims 1 or 2, characterised in that
the wall consists of injection mouldable plastics, and the wall (1) is moulded around the end section (5) enclosed by a foil (7).

4. Symbol lit by a light guide according to one of
claims 1 to 3, characterised in that
the foil (7) is coloured.

5. Symbol lit by a light guide according to one of
claims 1 to 4, characterised in that
the foil (7) is printed on the back.

6. Symbol lit by a light guide according to one of
claims 1 to 5, characterised in that
the foil (7) is between 0.01 and 0.05 mm, preferably 0.02 mm thick.

## Revendications

1. Symbole (2, 2', 2") susceptible d'être éclairé au moyen d'un conducteur optique (3, 3") et situé sur la surface (6) d'une paroi (1), en particulier d'une paroi de corps ou de capot, le conducteur optique (3, 3') traversant la paroi (1) par un tronçon terminal (5) et formant le symbole (2, 2', 2") sur la surface (6), caractérisé en ce qu'une feuille mince translucide (7) entoure au moins le tronçon terminal (5) proche de la paroi (1) et le symbole (2, 2', 2").

2. Symbole susceptible d'être éclairé au moyen d'un conducteur optique, selon la revendication 1, caractérisé en ce que le tronçon terminal (5) est une partie séparée du conducteur optique (3).

3. Symbole susceptible d'être éclairé par un conducteur optique selon l'une des revendications 1 ou 2, caractérisé en ce que la paroi (1) est constituée d'une manière de synthèse moulable par injection et en ce que la paroi (1) est moulée autour du tronçon terminal (5) entouré d'une feuille mince (7).

4. Symbole susceptible d'être éclairé par un conducteur optique selon l'une des revendications 1 à 3, caractérisé en ce que la feuille mince (7) est colorée.

5. Symbole susceptible d'être éclairé par un conducteur optique selon l'une des revendications 1 à 4, caractérisé en ce que la feuille mince (7) est imprimée à l'envers.

6. Symbole susceptible d'être éclairé par un conducteur optique selon l'une des revendications 1 à 5, caractérisé en ce que la feuille mince (7) a une épaisseur comprise entre 0,01 et 0,05 mm et de préférence une épaisseur de 0,02 mm.
